# EUROPEAN PATENT SPECIFICATION

(11) **EP 0 437 777 B1**
(45) Date of publication and mention of the grant of the patent: **14.05.1997**
(21) Application number: 90124762.7
(22) Date of filing: 19.12.1990
(51) Int. Cl.: B29C 45/27

(54) **Injection molding manifold and nozzle having laterally clamped flanges**
Spritzgiessverteiler und Düse mit seitlich gespannten Flanschen
Distributeur de moulage par injection et buse à brides serrées latéralement

(30) Priority: 19.01.1990 CA 2008170
(43) Date of publication of application: 24.07.1991
(73) Proprietor: MOLD-MASTERS LIMITED, Georgetown Ontario L7G 4X5 (CA)
(72) Inventor: Gellert, Jobst Ulrich, Georgetown, Ontario, L7G 2X1 (CA); Vettor, Dario, Mississauga, Ontario, L5A 2V7 (CA)
(74) Representative: Grünecker, Kinkeldey, Stockmair & Schwanhäusser Anwaltssozietät

(56) References cited:
- EP-A- 0 386 309
- CA-A- 1 274 369
- US-A- 4 292 018
- US-A- 4 570 673
- US-A- 4 702 689
- US-A- 4 793 795

## Description

### BACKGROUND OF THE INVENTION

The present invention relates to an injection molding apparatus of the type as indicated in the preamble portions of independent claims 1 and 6. An injection molding apparatus of this type is known from US-A-4,793,795.

Said conventional injecting molding apparatus comprises an arrangement for clamping the nozzles in desired positions along the side surface of the manifold.

In order to mold large parts using very high injection pressure, it is well known to supply melt through a number of heated nozzles, each aligned with a different gate. However, when the cavity is non-linear, it is difficult to mount the different nozzles so they are all properly aligned with the respective gates. An earlier solution to this problem is shown in U.S. Patent 4,702,689. U.S. Patent 4,810,184 shows heated nozzles being bolted to the side surface of the manifold. While the systems described in these previous patents each provide significant improvements, there is still a problem in that it remains difficult to quickly set up the system with each of the nozzles accurately aligned with its respective gate. Also, in these previous systems, the nozzles can only be positioned with a particular angular orientation in a single phase. A different clamping arrangement for mounting an actuating mechanism on a nozzle is shown in EP-A-386309 which is a document in the meaning of Article 54 (3) EPC, entitled "Injection Molding Nozzle with Self-Supporting Actuating Mechanism".

### SUMMARY OF THE INVENTION

Accordingly, it is an object of the invention to at least partially overcome the problems of the prior art by providing injection molding apparatus with an improved arrangement for accurately aligning a number of different nozzles with their respective gates.

In a first aspect of the present invention, the above object is achieved by the subject matter of claim 1.

In a second aspect, the above object is achieved by the subject matter of claim 6.

Further objects and advantages of the invention will appear from the following description taken together with the accompanying drawings.

### BRIEF DESCRIPTION OF THE DRAWINGS

Figure 1 is a sectional view taken through the manifold and one of the nozzles mounted on the manifold according to one embodiment of the invention,
Figure 2 is an exploded isometric vied showing the nozzle, connector collar, and manifold of Figure 1,
Figure 3 is a sectional view showing a portion of an injection molding system having a number of nozzles mounted on it according to the same embodiment of the invention,
Figure 4 is an isometric view showing a nozzle and a melt conduit member mounted to a manifold according to another embodiment of the invention;
Figure 5 is an isometric view of the melt conduit members seen in Figure 4, and
Figure 6 is a partial sectional view showing the melt flow path through the melt conduit member and nozzle.

### DETAILED DESCRIPTION OF THE DRAWINGS

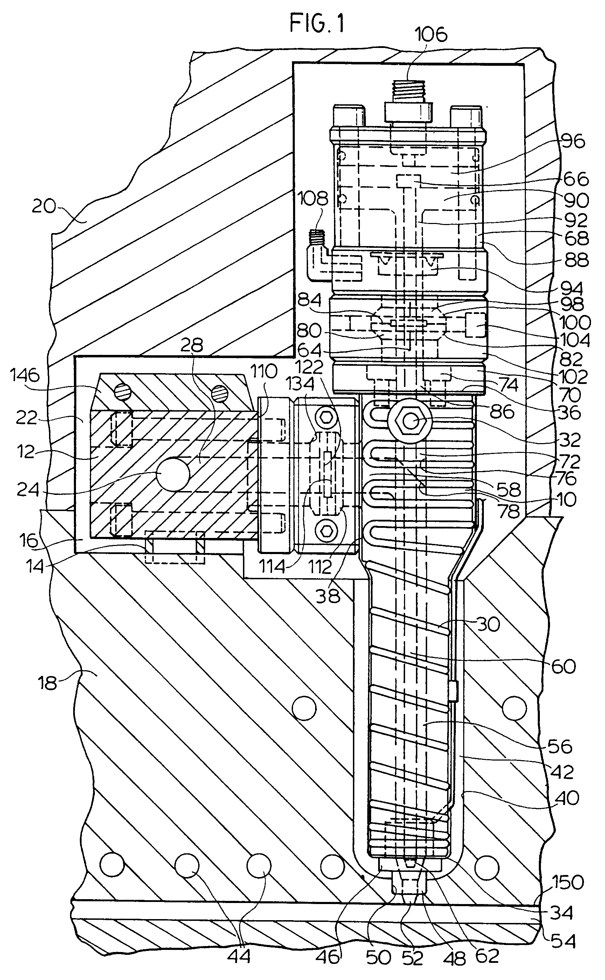

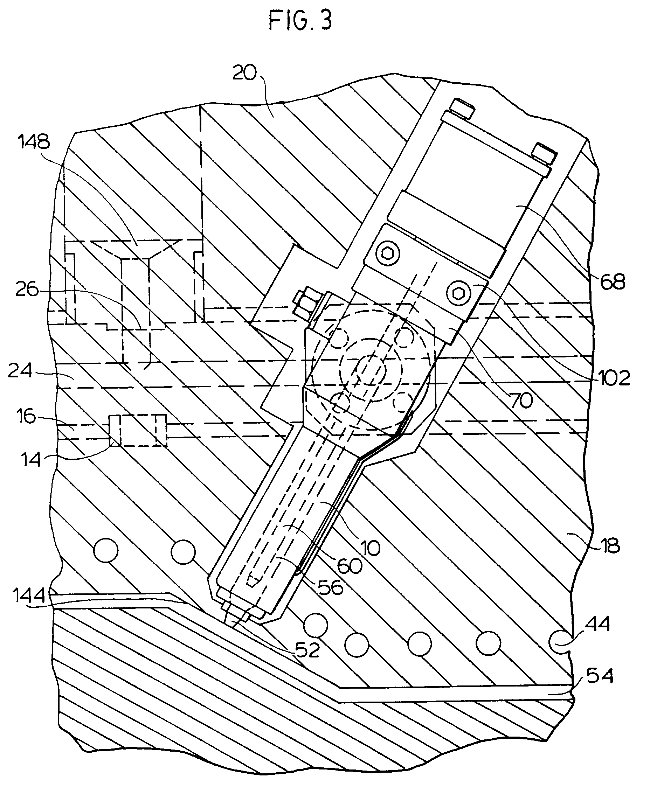

Reference is first made to Figure 1 which shows one of several nozzles 10 securely mounted in a desired position along an elongated manifold 12 according to one embodiment of the invention. The manifold 12 is securely positioned by a locating ring 14 in an opening 16 between the cavity plate 18 and the mold back plate 20. The manifold 12 is heated by a heater plate 146, and the hot manifold 12 is separated from the surrounding cooled cavity plate 18 and mold back plate 20 by an insulative air space 22. The manifold 12 has a central melt bore 24 which extends longitudinally from an inlet 26 (Figure 3) and branches to a number of lateral outlet bores 28.

The steel nozzle 10 is heated by an integral electrical heating element 30 extending from a terminal 32. The nozzle 10 has a forward end 34, a rear end 36 and a side surface 38. The forward end 34 of the nozzle 10 extends into a well 40 in the cavity plate 18. An insulative air space 42 is provided between the heated nozzle 10 and the cavity plate 18 which is cooled by pumping cooling water through cooling conduits 44. In this embodiment, the forward end 34 of the nozzle 10 has a gate insert 46 extending from it. As described in the applicant's EP-A1-361045 the gate insert 46 has a forward portion 48 which is received in a seat 50 which extends around the gate 52 leading to the cavity 54. This securely and accurately locates the forward end 34 of the nozzle 10 centrally in the well 40. The nozzle 10 has a melt channel 56 which extends through the gate insert 46 in alignment with the gate 52 in this position. In alternate embodiments, the gate insert 46 need not be provided and various other gating configurations can be used. In fact, for some applications, sprue gating can be used instead of valve gating. As described in more detail below, the melt channel 56 has a lateral portion 58 which extends in alignment with one of the lateral outlet bores 28 in the manifold 12.

An elongated valve member 60 is received centrally in the melt channel 56 of each nozzle 10. The elongated valve pin 60 has a forward end 62 which seats in the gate 52 in the forward closed position, and a portion 64 which extends rearwardly from the rear end 36 of the nozzle 10 to an enlarged head 66. The head 66 of the valve member 60 is engaged by pneumatic actuating mechanism 68 which is mounted on the rear end 36 of the nozzle 10 as described in the applicant's EP-A-386309 referred to above. A steel connector member 70 having a sealing sleeve portion 72 extending therefrom is secured to the rear end 36 of the nozzle 10 by bolts 74. The sleeve portion 72 extends forwardly into a central bore 76 in the nozzle 10 and fits around the valve member 60 to prevent leakage of pressurized melt as the valve member 60 reciprocates. The sleeve portion 72 extends to where the central bore 76 joins the melt channel 56 and has an angled forward end 78 to redirect the melt from the lateral portion 58. The connector member 70 has a rearwardly extending flange portion 80 with a tapered outer surface 82 and a rear face 84.

The rearwardly extending portion 64 of the valve member 60 extends through a central bore 86 in the connector member 70 into a cylinder 88 having a piston 90. The piston 90 has a hollow neck portion 92 which extends through a high pressure seal 94. The head 66 of the member 60 is secured to the piston 90 by a circular plate 96 which is bolted to the piston 90. The cylinder 88 also has a flange portion 98 with a tapered outer surface 100. The flange portion 98 of the cylinder 88 is secured to the flange portion 80 of the connector member by a lateral wedge clamp 102 which has two halves which are tightened together by bolts 104. Thus, when pneumatic pressure is applied to the cylinder 88 through connectors 106,108 on opposite sides of the piston 90, the piston and the valve member 60 are reciprocated between the retracted open position shown, and the forward closed position in which the forward end 62 of the valve member 60 is seated in the gate 52.

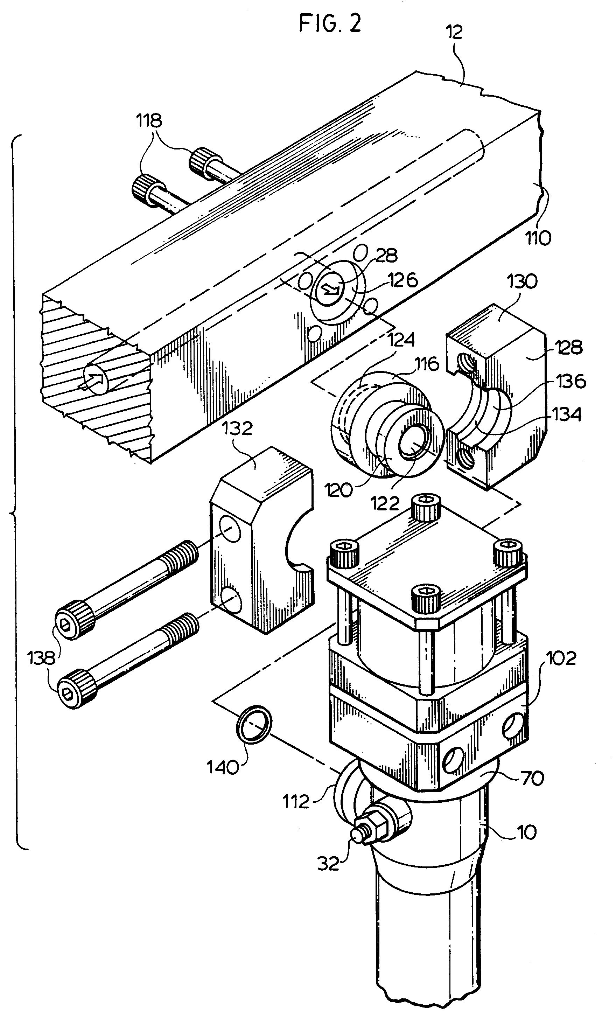

Reference is now also made to Figure 2 to describe how each nozzle 10 with its attached actuating mechanism 68 is mounted with a desired angular orientation along the side surface 110 of the manifold 12. The nozzle 10 has a steel tapered flange portion 112 which projects outward from the side surface 38. The lateral portion 58 of the melt channel 56 extends through this flange portion 112 from an inlet 114. A steel connector collar 116 is secured by bolts 118 to the side surface 110 of the manifold 12 around each lateral outlet bore 28 from the longitudinal melt bore 24. As can be seen, each connector collar 116 has an outwardly projecting matching flange portion 120 through which the outlet bore 28 extends to an outlet 122. Each connector collar 116 also has a neck portion 124 which projects inwardly into a recessed seat 126 in the side surface 110 of the manifold to accurately locate the connector collar 116 in alignment with the outlet bore 28.

The flange portion 112 of each nozzle is secured to the flange portion 120 of one of the connector collars 116 by a lateral wedge clamp 128. The wedge clamp 128 has two matching halves 130,132 with tapered inner surfaces 134 which form an opening 136 to receive the flange portions 112,120. When the halves 130,132 of the wedge clamp 128 are tightened together by bolts 138 over the tapered flange portions 112,120, the tapered inner surfaces 134 bear against them to hold them securely together with the outlet 122 aligned with the inlet 114. As can be seen in Figure 3, this has the advantage that each of the nozzles 10 can be positioned in any desired angular orientation before the bolts 138 are tightened and it will be retained in that position. This also greatly facilitates realignment, if necessary. In this embodiment of the invention, sealing washer 140 is seated between the flange portions 112,120. The sealing washer 140 is made of a suitable material such as a soft stainless and projects slightly outwardly from each flange portion 112,120. This provides an improved seal against leakage of the pressurized melt when the wedge clamp 128 is tightened.

In use, the system is assembled as shown. As seen in Figure 3, it is preferable that each gate 52 extend perpendicular to the adjacent wall 144 of the cavity 54, and this is greatly facilitated by the present invention. Electrical power is applied to the heating elements 30 and to the heater plate 146 to heat the manifold 12 and nozzles 10 to a predetermined operating temperature. Pressurized melt from a molding machine (not shown) engaged at a recessed inlet 148 is then injected into the manifold melt bore 24 according to a predetermined operating cycle. The pressurized melt flows out each of the outlet bores 28 and into each of the nozzles 10 through the aligned lateral portions 58 of the melt channel 56. It flows around the valve member 60 through the larger diameter melt channel 56 through the aligned gate insert 46 and gate 52, and into the cavity 54. Pneumatic pressure is also applied to each cylinder 88 according to the cycle to position the valve member in the retracted open position when the injection melt pressure is applied. After the cavities 54 are full, injection pressure is held momentarily to pack and pneumatic pressure is then applied to each cylinder 88 to drive the valve members 60 to the forward closed position in which the forward end 62 of each valve member 60 is seated in a respective gate 52. Injection pressure is then released and after a short cooling period, the mold is opened along the parting line 150 to eject the molded product. After ejection, the mold is closed and pneumatic pressure is reapplied to the cylinders 88 to withdraw the valve members 60 to the open position and injection pressure is reapplied to refill the cavities 54. This cycle is repeated continuously with a frequency dependent upon the size of cavity and type of material being molded.

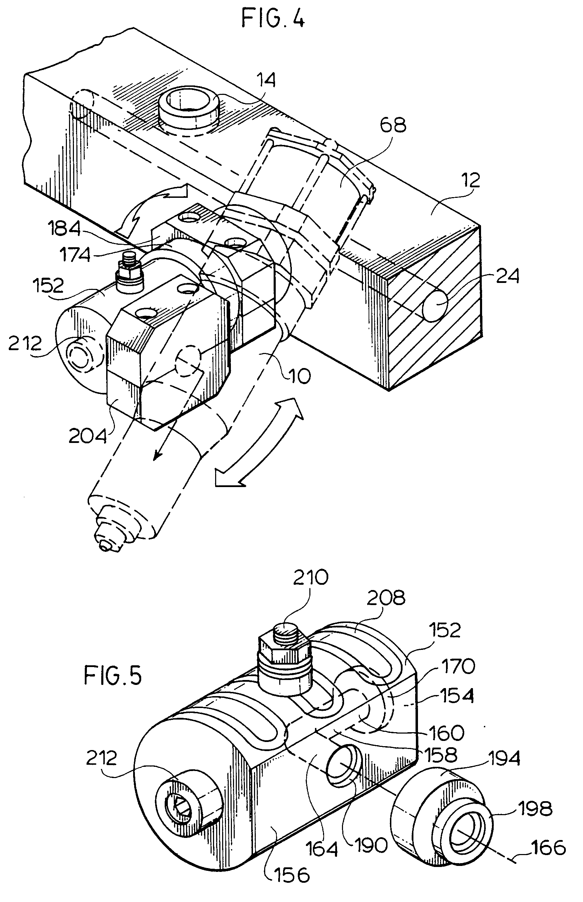

Reference is now made to Figures 4, 5 and 6 to describe another embodiment of the invention according to which the nozzles 10 mounted along the elongated manifold 12 can be located with any desired orientation and is not restricted to a single plane. As many of the elements of this embodiment of the invention are the same as those of the embodiment described above, they will be described and illustrated using the same reference numerals. Reference is first made to Figure 4 which shows one of several nozzles 10 mounted along an elongated manifold 12. The nozzle 10 and the manifold 12 have the same structure as described above and therefore it need not be repeated. It will be appreciated that each of the nozzles 10 mounted along the manifold 12 can have a different orientation depending upon the configuration of the particular injection molding system.

In this embodiment of the invention, a melt conduit member 152 (as shown in Figure 5) is mounted between the manifold 12 and each nozzle 10. Each melt conduit member 152 has an inlet face 154 and an outlet face 156 which extends generally perpendicular to the inlet face 154. The melt conduit member 152 has a melt conduit 158 which extends therethrough from the inlet face 154 to the outlet face 156. The melt conduit 158 has an inlet portion 160 extending from an inlet 162 and an outlet portion 164 with a central axis 166 extending to an outlet 168.

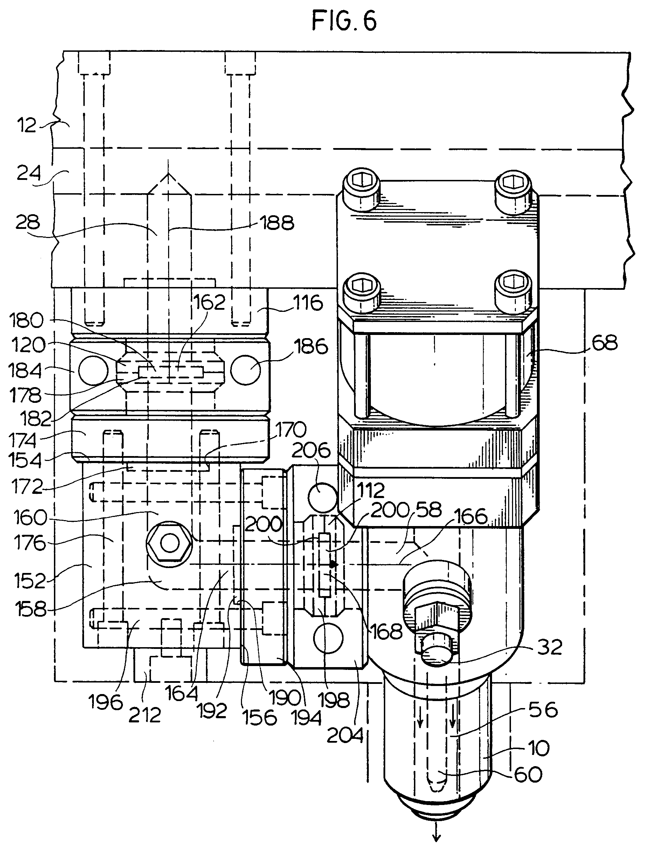

The inlet face 154 of each conduit member 152 has a recessed seat 170 which extends around the inlet portion 160 of the melt conduit 158 to receive the forwardly projecting neck portion 172 of a connector collar 174. The connector collar 174 is secured to the inlet face 154 of the conduit member 152 by bolts 176. The connector collar 174 has an outwardly projecting tapered flange portion 178 through which the inlet portion 160 of the melt conduit 158 extends. As can clearly be seen in Figure 6, the tapered flange portion 178 matches the flange portion 120 of the connector collar 116 through which one of the outlet bores 28 extends from the manifold 12. A stainless steel sealing washer 180 is also seated between the flange portions 120,178 as described above. The two flange portions 120,178 are secured together by a lateral wedge clamp 184 having two portions which are tightened together by bolts 186 over the flange portions 120,178. This secures the conduit member 152 to the manifold 12 with one of the outlet bores 28 in alignment with the inlet portion 160 of the melt conduit 158 through the conduit member. As will be appreciated, the conduit member 152 can be mounted in a desired angular position around the central axis 188 of the outlet bore 28 by rotating it to that position prior to tightening the bolts 186.

The outlet face 156 of each melt conduit member 152 similarly has a recessed seat 190 which extends around the outlet portion 164 of the melt conduit 158 to receive the forwardly projecting neck portion 192 of another connector collar 194. This connector collar 194 is secured to the outlet face 156 of the conduit member by bolts 196 which extend into the conduit member. This connector collar 194 similarly has an outwardly projecting tapered flange portion 198 through which the outlet portion 164 of the melt conduit extends. This tapered flange portion 198 matches the tapered flange portion 112 of one of the nozzles 10 through which the lateral portion 58 of the melt channel 56 extends. Another stainless steel sealing washer 200 is seated in these flange portions 198,112. The flange portions 198,112 are secured together by another lateral wedge clamp 204 having two portions which are tightened together by bolts 206. Thus, the nozzle 10 is mounted to the conduit member 152 with the outlet portion 164 of the melt conduit 158 aligned with the lateral portion 58 of the melt channel 56 through the nozzle 10. The nozzle can be positioned in a desired angular direction around the central axis 166 of the outlet portion 164 of the melt conduit 158 by rotating it to that position prior to tightening the bolts 206.

Consequently, referring particularly to Figure 4, it can be seen that each nozzle 10 can be given any desired angular orientation relative to the manifold 12 by rotating the melt conduit member 152 relative to the manifold 12, and rotating the nozzle 10 relative to the melt conduit member. While the melt flows through several right angle bends, it does not have to flow through a bend having an acute angle. The melt conduit member 152 is heated by an integral electrical heating element 208 having a terminal 210. In this embodiment , a spacer 212 is provided between the melt conduit member 152 and the adjacent mold (not shown) to assist in accurately locating the conduit member 152.

While the description of the injection molding nozzle mounting and positioning apparatus has been given with respect to preferred embodiments, it is not to be construed in a limiting sense. Variations and modifications will occur to those skilled in the art. For example, the melt conduit member 152 can be made having integral flange portions, and the flange portions and lateral wedge clamps can have various configurations. References is made to the appended claims for a definition of the invention.

## Claims

1. An injection molding apparatus having a plurality of heated nozzles (10) spaced along a common elongated manifold (12) with a first side surface (110), each nozzle (10) having a forward end (34), a rear end (36), and a second side surface (38), each nozzle (10) being located with the forward end (34) extending into a well (40) in a cavity plate (18), each nozzle (10) having a melt channel (56) extending from a melt channel inlet (114) on the second side surface (38) to a gate (52) leading to a cavity (54), the manifold (12) having a longitudinal melt bore (24), said melt bore (24) extending from a common inlet (148) and branching to a plurality of outlet bores (28), the outlet bores (28) extending respectively to manifold outlets (122) spaced along the first side surface (110) of the manifold (12), each outlet (122) being aligned with the melt channel inlet (114) to one of the nozzles (10), characterized in that
each outlet bore (28) of the manifold (12) extends through a first round flange portion (120) which projects from the first side surface (110) of the manifold (12),
the melt channel (56) of each nozzle (10) has a lateral portion (58) which extends from the melt channel inlet (114) through a second round flange portion (112) which projects from the second side surface (38) of the nozzle (10), at least one of the first and second round flange portions (120), (112) being tapered and
a plurality of clamping means (128) to clamp said first and second round flange portions (120), (112) together, each clamping means (128) having first and second opposed portions (130), (132), the first and second opposed portions (130), (132) each having inner surfaces (134) to define a round opening (136) therebetween, at least one of the inner surfaces (134) being tapered, each clamping means (128) being mounted to receive in said round opening (136) one of the first round flange portions (120) projecting from the manifold (12) and an abutting second round flange portion (112) of a respective nozzle (10), the first and second opposed portions (130), (132) of the clamping means (128) being tightened together transversely to where the first and second flange portions (120), (112) abut to secure the first and second flange portions (120), (112) together, whereby each nozzle (10) is securely mounted with a desired angular orientation along the first side surface (110) of the manifold (12).

2. Injection molding apparatus as claimed in claim 1 wherein each of the first tapered flange portions (120) extends from a connector collar (116) which is secured to the first side surface (110) of the manifold (12) in alignment with one of the outlet bores (28), the said one of the outlet bores (28) extending through the connector collar (116) to the manifold outlet (122).

3. Injection molding apparatus as claimed in claim 2 wherein each connector collar (116) has an inwardly projecting neck portion (124) which is received in a recessed seat (126) in the side surface (110) of the manifold (12) to locate the connector collar (116) in alignment with an outlet bore (28) extending from the longitudinal bore (24) in the manifold (12).

4. Injection molding apparatus as claimed in claim 3 wherein each connector collar (116) is securely bolted to the manifold (12).

5. Injection molding apparatus as claimed in claim 4 wherein the first and second opposed portions (130), (132) are tightened together by bolts (138) which extend transversely to where the first and second flange portions (120), (112) abut.

6. An injection molding apparatus having a plurality of heated nozzles (10) extending from a common elongated manifold (12) with a first side surface (110), each nozzle (10) having a forward end (34), a rear end (36), and a second side surface (38), each nozzle (10) being located with the forward end (34) extending into a well (40) in a cavity plate (18), each nozzle (10) having a melt channel (56) extending from a melt channel inlet (114) on the second side surface (38) to a gate (52) leading to a cavity (54), the manifold (12) having a longitudinal melt bore (24) extending from a common inlet (148), said melt bore (24) branching to a plurality of outlet bores (28), each outlet bore (28) having a central axis (166) and extending to a separate manifold outlet (122), the manifold outlets (122) being spaced along the first side surface (110) of the manifold (12), characterized in that
a melt conduit member (152) is mounted between the manifold (12) and each nozzle (10), the melt conduit member (152) having an inlet face (154) and an outlet face (156), the outlet face (156) extending substantially perpendicular to the inlet face (154), the melt conduit member (152) having a melt conduit (158) extending therethrough, a melt conduit (158) having an inlet portion (160) and an outlet portion (164), the inlet portion (160) extending from a melt conduit inlet (162) through the inlet face (154) and the outlet portion (164) having a central axis (166) and extending to an outlet (168) through the outlet face (156),
each melt conduit member (152) is clamped along the first side surface (110) of the manifold (12) with the inlet (162) to each melt conduit member (152) in alignment with the outlet (122) from one of the outlet bores (28), each melt conduit member (152) being clamped in a desired angular position around the central axis (188) of the outlet bore (28), and
each of said nozzles (10) is clamped to a corresponding melt conduit member (152) with the outlet (168) from the outlet portion (164) of the melt conduit (152) in alignment with the melt channel inlet (114) to the nozzle (10), each nozzle (10) being clamped in a desired angular position around the central axis (166) of the outlet portion (164) of the melt conduit (158) through the corresponding melt conduit member (152), whereby a desired angular position of each melt conduit member (152) relative to the manifold (12) and a desired angular position of each nozzle (10) relative to the melt conduit member (152) are selected to provide each nozzle (10) with any desired angular orientation.

7. Injection molding apparatus as claimed in claim 6 wherein:
each outlet bore (28) of the manifold (12) extends through a first round flange portion (120) which projects from the first side surface (110) of the manifold (12),
the inlet portion (160) of the melt conduit (158) extending through each melt conduit member (152) extends through a second round flange portion (178) which projects from the inlet face (154) of the melt conduit member (152) at least one of the first and second round flange portions (120), (178) being tapered, and
first clamping means (184) having first and second opposed portions, the first and second opposed portions each having inner surfaces to define a first round opening therebetween, at least one of the inner surfaces being tapered, the first clamping means (184) being mounted to receive in said first round opening one of the first round flange portions (120) projecting from the manifold (12) and an abutting second round flange portion (178) of a respective melt conduit member (152), the first and second opposed portions of the first clamping means (184) being tightened together transversely to where the first and second flange portions (120), (178) abut to securely mount the melt conduit member (152) along the side surface (110) of the manifold (12) in said desired angular position around the central axis (188) of the outlet bore (28).

8. Injection molding apparatus as claimed in claim 7 wherein:
the outlet portion (164) of the melt conduit (158) extending through each melt conduit member (152) extends through a third round flange portion (198) which projects from the outlet face (156) of the melt conduit member (152),
the melt channel (56) of each nozzle (10) has a lateral portion (58) which extends from the melt channel inlet (114) through a fourth round flange portion (112) which projecting from the side surface (38) of the nozzle (10), at least one of the third and fourth round flange portions being tapered and
second clamping means (204) having third and fourth opposed portions, the third and fourth opposed portions each having inner surfaces to define a second round opening therebetween, at least one of the inner surfaces being tapered, the second clamping means (204) being mounted to receive in said second round opening the third round flange portion (198) projecting from the outlet face (156) of each melt conduit member (152) and an abutting fourth round flange portion (112) of a respective nozzle (10), the third and fourth opposed portions of the second clamping means (204) being tightened together transversely to where the third and fourth flange portions (198), (112) abut to securely mount the nozzle to said melt conduit member (152) in said desired angular position around the central axis (166) of the outlet portion (164) of the melt conduit (152).

9. Injection molding apparatus as claimed in claim 7 wherein said first and second opposed portions of the first clamping means (184) are tightened together by bolts (186) which extend transversely to where the first and second flange portions (120), (178) abut.

10. Injection molding apparatus as claimed in claim 8 wherein said third and fourth opposed portions of the second clamping means (204) are tightened together by bolts (206) which extend transversely to where the third and fourth flange portions (198), (112) abut.

## Patentansprüche

1. Spritzgießvorrichtung mit mehreren beheizten Düsen (10), die an einem gemeinsamen länglichen Verteiler (12), der eine erste Seitenfläche aufweist, mit Zwischenraum angeordnet sind, wobei jede Düse(10) ein vorderes Ende (34), ein hinteres Ende (36) und eine zweite Seitenfläche (38) aufweist, jede Düse (10) derart angeordnet ist, daß sich das vordere Ende (34) in einer Ausnehmung (40) in einer Nestplatte (34) erstreckt, jede Düse (10) einen Schmelzkanal (56) aufweist, der sich von einem Schmelzkanaleinlaß (114) an der zweiten Seitenfläche (38) zu einem Anschnitt (52) erstreckt, der zu einem Hohlraum (54) führt, erstreckt, der Verteiler (12) eine längliche Schmelzbohrung (24) aufweist, wobei die Schmelzbohrung (24) sich von einem gemeinsamen Einlaß (148) erstreckt und zu mehreren Auslaßbohrungen abzweigt, die Auslaßbohrungen (28) sich zu entsprechenden Verteilerauslässen (122) erstrecken, die entlang der ersten Seitenfläche (110) des Verteilers (12) mit Zwischenraum angeordnet sind, jeder Auslaß (122) mit dem Schmelzkanaleinlaß (114) zu einer der Düsen (10) ausgerichtet ist,
**dadurch gekennzeichnet,**
daß jede Auslaßbohrung (28) des Verteilers (12) sich durch einen ersten runden Flanschabschnitt (120) erstreckt, der von der ersten Seitenfläche (110) des Verteilers (12) absteht,
daß der Schmelzkanal (56) jeder Düse (190) einen seitlichen Abschnitt (58) aufweist, der sich von dem Schmelzkanaleinlaß (114) durch einen zweiten runden Flanschabschnitt (112), der von der zweiten Seitenfläche (38) der Düse (10) absteht, erstreckt, wobei wenigstens einer der ersten und zweiten Flanschabschnitte (120), (112) konisch zuläuft,
und daß mehrere Klemmteile (128) zum Zusammenklemmen der ersten und zweiten Flanschabschnitte (120), (112) vorgesehen sind, wobei jedes Klemmteil (128) erste und zweite gegenüberliegende Abschnitte (130), (132) aufweist, der erste und zweite gegenüberliegende Abschnitt (130), (132) jeweils Innenflächen (134) aufweist, die zwischen sich eine runde Öffnung (136) bilden, wobei wenigstens eine der Innenflächen (134) konisch zuläuft, jedes Klemmteil (128) derart angeordnet ist, daß in der runden Öffnung (136) einer der ersten runden Flanschabschnitte (120), der von dem Verteiler (12) absteht, und ein anliegender zweiter runder Flanschabschnitt (112) einer entsprechenden Düse (10) aufgenommen ist, der erste und der zweite gegenüberliegende Abschnitt (130), (132) des Klemmteils (128) quer miteinander bis dahin verspannt sind, wo der erste und der zweite Flanschabschnitt (120), (112) aneinander anliegen, um den ersten und den zweiten Flanschabschnitt (120), (112) miteinander zu verbinden, wodurch jede Düse (10) sicher in der gewünschten Winkelstellung entlang der ersten Seitenfläche (110) des Verteilers (12) befestigt ist.

2. Spritzgießvorrichtung nach Anspruch 1, **dadurch gekennzeichnet,** daß jeder der ersten und zweiten Flanschabschnitte (120), (112) sich von einem sich von einem Verbindungskragen (116) erstreckt, der an der ersten Seitenfläche (110) des Verteilers (129 ausgerichtet zu einer der Auslaßbohrungen (28) befestigt ist, wobei die Auslaßbohrung (28) sich durch den Verbindungskragen (116) zu dem Verteilerauslaß (122) erstreckt.

3. Spritzgießvorrichtung nach Anspruch 2, **dadurch gekennzeichnet,** daß jeder Verbindungskragen (116) einen nach innen abstehenden Halsabschnitt (124) aufweist, der in einem ausgesparten Sitz (126) in der Seitenfläche (110) des Verteilers (12) aufgenommen ist, um den Verbindungskragen (116) ausgerichtet zu einer Auslaßbohrung, die sich von der länglichen Bohrung (24) in dem Verteiler (12) erstreckt, auszurichten.

4. Spritzgießvorrichtung nach Anspruch 3, **dadurch gekennzeichnet,** daß jeder Verbindungskragen (116) sicher mit dem Verteiler (12) verschraubt ist.

5. Spritzgießvorrichtung nach Anspruch 4, **dadurch gekennzeichnet,** daß der erste und zweite gegenüberliegende Abschnitt (130), (132) miteinander durch Schrauben (138) verspannt sind, die sich quer zu der Anlage der ersten und zweiten Flanschabschnitte (120), (112) erstrecken.

6. Spritzgießvorrichtung mit mehreren beheizten Düsen (1), die sich von einem gemeinsamen länglichen Verteiler (12), der eine erste Seitenflache (110) aufweist, erstrecken, wobei jede Düse(10) ein vorderes Ende (34), ein hinteres Ende (36) und eine zweite Seitenfläche (38) aufweist, jede Düse (10) derart angeordnet ist, daß sich das vordere Ende (34) in einer Ausnehmung (40) in einer Nestplatte (34) erstreckt, jede Düse (10) einen Schmelzkanal (56) aufweist, der sich von einem Schmelzkanaleinlaß (114) an der zweiten Seitenfläche (38) zu einem Anschnitt (52) erstreckt, der zu einem Hohlraum (54) führt, erstreckt, der Verteiler (12) eine längliche Schmelzbohrung (24) aufweist, die sich von einem gemeinsamen Einlaß (148) erstreckt, wobei die Schmelzbohrung (24) zu mehreren Auslaßbohrungen abzweigt, jede Auslaßbohrungen (28) eine Mittelachse aufweist und sich zu einem getrennten Verteilerauslaß (122) erstreckt, die Verteilerauslässe (122) mit Zwischenraum entlang der ersten Seitenfläche (110) des Verteilers (12) angeordnet sind,
**dadurch gekennzeichnet,**
daß ein Schmelzedurchlaßteil (152) zwischen dem Verteiler (12) und jeder Düse (10) angeordnet ist, das Schmelzedurchlaßteil (152) eine Einlaßfläche (154) und eine Auslaßfläche (156) aufweist, die Auslaßfläche (156) sich im wesentlichen rechtwinkelig zu der Einlaßfläche (154) erstreckt das Schmelzedurchlaßteil (152) einen sich dadurch erstreckenden Schmelzedurchlaß (158) aufweist, der Schmelzedurchlaß (158) einen Einlaßabschnitt (160) und einen Auslaßabschnitt (164) aufweist, der Einlaßabschnitt (160) sich von einem Schmelzeeinlaß (162) durch die Einlaßfläche (154) erstreckt und der Auslaßabschnitt (164) eine Mittelachse (166) aufweist und sich zu einem Auslaß durch die Auslaßfläche (156) erstreckt
daß jedes Schmelzedurchlaßteil (152) entlang der ersten Seitenfläche (110) des Verteilers (12) so angeklemmt ist, daß der Einlaß (162) zu jedem Schmelzedurchlaßteil (152) auf den Auslaß (122) einer der Auslaßbohrungen (28) ausgerichtet ist, jedes Schmelzedurchlaßteil (152) in einer gewünschten Winkelstellung um die Mittelachse (188) der ersten Auslaßbohrung (28) angeklemmt ist,
und daß jede der Düsen (10) an dem entsprechenden Schmelzedurchlaßteil (152) derart angeklemmt ist, daß der Auslaß (168) von dem Auslaßabschnitt (164) des Schmelzedurchlaßteiles (152) auf den Schmelzkanaleinlaß (114) zu der Düse (10) ausgerichtet ist, wobei jede Düse (10) in einer gewünschten Winkelstellung um die Mittelachse (166) des Auslaßabschnittes (164) des Schmelzedurchlaßteiles (152) über das entsprechende Schmelzedurchlaßteil (152) angeklemmt ist, wodurch eine gewünschte Winkelstellung jedes Schmelzedurchlaßteiles (152) relativ zu dem Verteiler (12) und eine gewünschte Winkelstellung jeder Düse (10) relativ zu dem Schmelzedurchlaßteiles (152) ausgewählt werden, um jede Düse (10) in jeder gewünschten Winkelstellung anzuordnen.

7. Spritzgießvorrichtung nach Anspruch 6, **dadurch gekennzeichnet,** daß jede Auslaßbohrung (28) des Verteilers (12) sich durch einen ersten runden Flanschabschnitt (120) erstreckt, der von der ersten Seitenfläche (110) des Verteilers (12) absteht,
daß der sich durch jedes Schmelzedurchlaßteil (152) erstreckende Einlaßabschnitt (160) des Schmelzedurchlasses (158) sich durch einen zweiten runden Flanschabschnitt (178) erstreckt, der von der Einlaßfläche (154) des Schmelzedurchlaßteiles (152) absteht, wobei wenigstens einer der ersten und zweiten runden Flanschabschnitte (120), (178) konisch zuläuft, und
daß ein erstes Klemmteil (128) mit einem ersten und einem zweiten gegenüberliegenden Abschnitt vorgesehen ist, wobei der erste und der zweite gegenüberliegende Abschnitt jeweils innere Oberflächen haben, die zwischen sich eine erste runde Öffnung (136) bilden, wobei wenigstens eine der runden Öffnungen konisch zuläuft, das erste Klemmteil (184) derart befestigt ist, daß in der ersten runden Öffnung einer der ersten runden Flanschabschnitte (120), der von dem Verteiler (12) absteht, und ein anliegender zweiter runder Flanschabschnitt (178) eines entsprechenden Schmelzedurchlaßteiles (152) aufgenommen ist, der erste und der zweite gegenüberliegende Abschnitt des Klemmteils (128) quer miteinander bis dahin verspannt sind, wo der erste und der zweite Flanschabschnitt (120), (178) aneinander anliegen, um das Schmelzedurchlaßteil (152) sicher entlang der ersten Seitenfläche (110) des Verteilers (12) in der gewünschten Winkelstellung um die Mittelachse (188) der Auslaßbohrung (28) zu befestigten.

8. Spritzgießvorrichtung nach Anspruch 7, **dadurch gekennzeichnet,**
daß der sich durch jedes Schmelzedurchlaßteil (152) erstreckende Auslaßabschnitt (164) des Schmelzedurchlasses (158) sich durch einen dritten runden Flanschabschnitt (198) erstreckt, der von der Einlaßfläche (156) des Schmelzedurchlaßteiles (152) absteht,
daß der Schmelzkanal (56) jeder Düse (190) einen seitlichen Abschnitt (58) aufweist, der sich von dem Schmelzkanaleinlaß (114) durch einen vierten runden Flanschabschnitt (112), der von der Seitenfläche (38) der Düse (10) absteht, erstreckt, wobei wenigstens einer der dritten und vierten Flanschabschnitte konisch zuläuft,
daß ein zweites Klemmteil (204) mit einem dritten und einem vierten gegenüberliegenden Abschnitt vorgesehen ist, wobei der dritte und der vierte gegenüberliegende Abschnitt jeweils innere Oberflächen haben, die zwischen sich eine erste runde Öffnung (136) bilden, wobei wenigstens eine der runden Öffnungen konisch zuläuft, das zweite Klemmteil (204) derart befestigt ist, daß in der zweiten runden Öffnung der dritte runde Flanschabschnitt (198), der von der Auslaßfläche (56) jedes Schmelzedurchlaßteiles (152) absteht, und ein anliegender vierter runder Flanschabschnitt (112) einer entsprechenden Düse (10) aufgenommen ist, der dritte und vierte gegenüberliegende Abschnitt des zweiten Klemmteils (204) quer miteinander bis dahin verspannt sind, wo dritte und vierte Flanschabschnitte (198), (112) aneinander anliegen, um die Düse sicher an dem Schmelzedurchlaßteil (152) in der gewünschten Winkelstellung um die Mittelachse (166) der Auslaßabschnittes (164) des Schmelzedurchlaßteiles (152) zu befestigten.

9. Spritzgießvorrichtung nach Anspruch 7, **dadurch gekennzeichnet,** daß der erste und zweite gegenüberliegende Abschnitt des ersten Klemmteils (184) miteinander durch Schrauben (186) verspannt sind, die sich quer zu der Anlage der ersten und zweiten Flanschabschnitte (120), (178) erstrecken.

10. Spritzgießvorrichtung nach Anspruch 8, **dadurch gekennzeichnet,** daß der dritte und vierte gegenüberliegende Abschnitt des zweiten Klemmteils (204) miteinander durch Schrauben (206) verspannt sind, die sich quer zu der Anlage der ersten und zweiten Flanschabschnitte (198), (112) erstrecken.

## Revendications

1. Appareil de moulage par injection comprenant une pluralité de buses chauffées (10) espacées le long d'un distributeur allongé commun (12) avec une première surface latérale (110), chaque buse (10) ayant une extrémité avant (34), une extrémité arrière (36), et une seconde surface latérale (38), chaque buse (10) étant placée avec l'extrémité avant (34) avançant dans un puits (40) dans une plaque d'empreinte (18), chaque buse (10) comportant un canal de fusion (56) qui s'étend depuis une entrée de canal de fusion (114) sur la seconde surface latérale (38) jusqu'à une entrée (52) conduisant à une empreinte (54), le distributeur (12) comportant un trou longitudinal de fusion (24), ledit trou de fusion (24) s'étendant depuis une entrée commune (148) et se divisant en une pluralité de trous de sortie (28), les trous de sortie (28) s'étendant respectivement jusqu'à des sorties de distributeur (122) espacées le long de la première surface latérale (110) du distributeur (12), chaque sortie (122) étant alignée avec l'entrée de canal de fusion (114) menant à l'une des buses (10), caractérisé en ce que
chaque trou de sortie (28) du distributeur (12) s'étend à travers une première partie ronde en bride (120) qui dépasse de la première surface latérale (110) du distributeur (12),
le canal de fusion (56) de chaque buse (10) comporte une partie latérale (58) qui s'étend depuis l'entrée de canal de fusion (114) à travers une seconde partie ronde en bride (112) qui dépasse de la seconde surface latérale (38) de la buse (10), au moins l'une des première et seconde parties rondes en bride (120), (112) étant conique, et
une pluralité de moyens de serrage (128) pour serrer ensemble lesdites première et seconde parties rondes en bride (120), (112), chaque moyen de serrage (128) ayant des première et seconde parties opposées (130), (132), les première et seconde parties opposées (130), (132) ayant chacune des surfaces intérieures (134) qui définissent une ouverture ronde (136) entre elles, au moins une des surfaces intérieures (134) étant conique, chaque moyen de serrage (128) étant monté de manière à recevoir dans ladite ouverture ronde (136) une des première parties rondes en bride (120) dépassant du distributeur (12) et une seconde partie ronde en bride en butée (112) d'une buse respective (10), les première et seconde parties opposées (130), (132) des moyens de serrage (128) étant serrées ensemble transversalement au point où aboutissent les première et seconde parties en bride (120), (112) afin de fixer ensemble les première et seconde parties en bride (120), (112), de telle sorte que chaque buse (10) est montée fixement avec une orientation angulaire désirée le long de la première surface latérale (110) du distributeur (12).

2. Appareil de moulage par injection selon la revendication 1, dans lequel chacune des première parties coniques en bride (120) part d'un collier connecteur (116) qui est fixé à la première surface latérale (110) du distributeur (12) en alignement avec un premier des trous de sortie (28), ledit premier des trous de sortie (28) s'étendant à travers le collier connecteur (116) jusqu'à la sortie de distributeur (122).

3. Appareil de moulage par injection selon la revendication 2, dans lequel chaque collier connecteur (116) comporte une partie en collet (124), dépassant vers l'intérieur, qui est reçue dans un logement évidé (126) dans la surface latérale (110) du distributeur (12) de manière à placer le collier connecteur (116) en alignement avec un trou de sortie (28) s'étendant depuis le trou longitudinal (24) dans le distributeur (12).

4. Appareil de moulage par injection selon la revendication 3, dans lequel chaque collier connecteur (116) est fixé solidement au distributeur (12).

5. Appareil de moulage par injection selon la revendication 4, dans lequel les première et seconde parties opposées (130), (132) sont serrées ensemble par des boulons (138) qui s'étendent transversalement au point où aboutissent les première et seconde parties en bride (120), (112).

6. Appareil de moulage par injection comprenant une pluralité de buses chauffées (10) s'étendant depuis un distributeur allongé commun (12) avec une première surface latérale (110), chaque buse (10) ayant une extrémité avant (34), une extrémité arrière (36), et une seconde surface latérale (38), chaque buse (10) étant placée avec l'extrémité avant (34) qui avance dans un puits (40) dans une plaque d'empreinte (18), chaque buse (10) comportant un canal de fusion (56) qui s'étend depuis une entrée de canal de fusion (114) sur la seconde surface latérale (38) jusqu'à une entrée (52) conduisant à une empreinte (54), le distributeur (12) comportant un trou longitudinal de fusion (24) qui s'étend depuis une entrée commune (148), ledit trou de fusion (24) se divisant en une pluralité de trous de sortie (28), chaque trou de sortie (28) ayant un axe central (166) et s'étendant jusqu'à une sortie séparée de distributeur (122), les sorties de distributeur (122) étant espacées le long de la première surface latérale (110) du distributeur (12), caractérisé en ce que
un élément à conduit de fusion (152) est monté entre le distributeur (12) et chaque buse (10), l'élément à conduit de fusion (152) ayant une face d'entrée (154) et une face de sortie (156), la face de sortie (156) s'étendant de façon sensiblement perpendiculaire à la face d'entrée (154), l'élément à conduit de fusion (152) ayant un conduit de fusion (158) qui le traverse, le conduit de fusion (158) ayant une partie d'entrée (160) et une partie de sortie (164), la partie d'entrée (160) s'étendant depuis une entrée de conduit de fusion (162) à travers la face d'entrée (154) et la partie de sortie (164) ayant un axe central (166) et s'étendant jusqu'à une sortie (168) à travers la face de sortie (156),
chaque élément à conduit de fusion (152) est serré le long de la première surface latérale (110) du distributeur (12) avec l'entrée (162) dans chaque élément à conduit de fusion (152) en alignement avec la sortie (122) de l'un des trous de sortie (28), chaque élément à conduit de fusion (152) étant serré dans une position angulaire désirée autour de l'axe central (188) du trou de sortie (28), et
chacune desdites buses (10) est serrée sur un élément à conduit de fusion correspondant (152) avec la sortie (168) de la partie de sortie (164) du conduit de fusion (158) en alignement avec l'entrée de canal de fusion (114) dans la buse (10), chaque buse (10) étant serrée dans une position angulaire désirée autour de l'axe central (166) de la partie de sortie (164) du conduit de fusion (158) à travers l'élément à conduit de fusion correspondant (152), de telle sorte qu'une position angulaire désirée de chaque élément à conduit de fusion (152) par rapport au distributeur (12) et une position angulaire désirée de chaque buse (10) par rapport à l'élément à conduit de fusion (152) sont sélectionnées pour donner à chaque buse (10) n'importe quelle orientation angulaire désirée.

7. Appareil de moulage par injection selon la revendication 6, dans lequel :
chaque trou de sortie (28) du distributeur (12) s'étend à travers une première partie ronde en bride (120) qui dépasse de la première surface latérale (110) du distributeur (12),
la partie d'entrée (160) du conduit de fusion (158) s'étendant à travers chaque élément à conduit de fusion (152) s'étend à travers une seconde partie ronde en bride (178) qui dépasse de la face d'entrée (154) de l'élément à conduit de fusion (152), au moins l'une des première et seconde parties rondes en bride (120), (178) étant conique, et
des premiers moyens de serrage (184) ayant des première et seconde parties opposées, les première et seconde parties opposées ayant chacune des surfaces intérieures qui définissent une première ouverture ronde entre elles, au moins l'une des surfaces intérieures étant conique, les premiers moyens de serrage (184) étant montés de manière à recevoir dans ladite première ouverture ronde une des premières parties rondes en bride (120) dépassant du distributeur (12) et une seconde partie ronde en bride en butée (178) d'un élément à conduit de fusion respectif (152), les première et seconde parties opposées des premiers moyens de serrage (184) étant serrées ensemble transversalement au point où aboutissent les première et seconde parties en bride (120), (178) afin de monter fixement l'élément à conduit de fusion (152) le long de la surface latérale (110) du distributeur (12) dans ladite orientation angulaire désirée autour de l'axe central (188) du trou de sortie (28).

8. Appareil de moulage par injection selon la revendication 7, dans lequel :
la partie de sortie (164) du conduit de fusion (158) s'étendant à travers chaque élément à conduit de fusion (152) s'étend à travers une troisième partie ronde en bride (198) qui dépasse de la face de sortie (156) de l'élément à conduit de fusion (152),
le canal de fusion (56) de chaque buse (10) comporte une partie latérale (58) qui s'étend depuis l'entrée de canal de fusion (114) à travers une quatrième partie ronde en bride (112) qui dépasse de la surface latérale (38) de la buse (10), au moins l'une des troisième et quatrième parties rondes en bride étant conique, et
des seconds moyens de serrage (204) ayant des troisième et quatrième parties opposées, les troisième et quatrième parties opposées ayant chacune des surfaces intérieures qui définissent une seconde ouverture ronde entre elles, au moins l'une des surfaces intérieures étant conique, les seconds moyens de serrage (204) étant montés de manière à recevoir dans ladite seconde ouverture ronde la troisième partie ronde en bride (198) dépassant de la face de sortie (156) de chaque élément à conduit de fusion (152) et une quatrième partie ronde en bride en butée (112) d'une buse respective (10), les troisième et quatrième parties opposées des seconds moyens de serrage (204) étant serrées ensemble transversalement au point où aboutissent les troisième et quatrième parties en bride (198), (112) afin de monter fixement la buse sur ledit élément à conduit de fusion (152) dans ladite position angulaire désirée autour de l'axe central (166) de la partie de sortie (164) du conduit de fusion (152).

9. Appareil de moulage par injection selon la revendication 7, dans lequel lesdites première et seconde parties opposées des premiers moyens de serrage (184) sont serrées ensemble par des boulons (186) qui s'étendent transversalement au point où aboutissent les première et seconde parties en bride (120), (178).

10. Appareil de moulage par injection selon la revendication 8, dans lequel lesdites troisième et quatrième parties opposées des seconds moyens de serrage (204) sont serrées ensemble par des boulons (206) qui s'étendent transversalement au point où aboutissent les troisième et quatrième parties en bride (198), (112).
